# EUROPÄISCHE PATENTANMELDUNG

(11) **EP 0 980 875 A2**
(43) Veröffentlichungstag der Anmeldung: **23.02.2000**
(21) Anmeldenummer: 99115926.0
(22) Anmeldetag: 13.08.1999
(51) Int. Cl.: C08F 4/42

(54) **Polymerisationsaktive, nicht verbrückte, mononucleare Bisalkylmetall-Halbsandwichkomplexe auf der Basis von Seltenerd-Metallen und deren Verwendung als Katalysatoren für die (Co)polymerisation von polaren und unpolaren olefinisch ungesättigten Monomeren**

(30) Priorität: 14.08.1998 DE 19836926
(71) Anmelder: BASF AKTIENGESELLSCHAFT, 67056 Ludwigshafen (DE)
(72) Erfinder: Okuda, Jun, Prof. Dr., 55218 Ingelheim (DE); Hultzsch, Kai, 65207 Wiesbaden (DE); Geprägs, Michael, Dr., 67245 Lambsheim (DE)

(57) **Zusammenfassung**

Polymerisationsaktive, nicht verbrückte, mononucleare Bisalkylmetallhalbsandwichkomplexe der allgemeinen Formel

[CpR₄₋ₘ(SiR'₃)₁₊ₘ]M(L)[CH₂₋ₙ(SiR''₃)₁₊ₙ]₂ (I),

in der die Substituenten und Indizes die folgende Bedeutung haben:
- M: Scandium, Yttrium, Lanthan oder ein Lanthanoidmetall,
- R: Wasserstoff, Halogen, C₁- bis C₂₀-Alkyl, C₃- bis C₁₀-Cycloalkyl, C₆- bis C₁₅-Aryl oder C₃- bis C₃₀-Organosilyl, wobei zwei benachbarte Reste R auch eine 4 bis 18 C-Atome aufweisende gesättigte oderungesättigte cyclische oder heterocyclische Gruppe ausbilden können,
- R', R'': C₁- bis C₂₀-Alkyl, C₃- bis C₁₀-Cycloalkyl, C₆- bis C₁₅-Aryl oder Alkylaryl mit 1 bis 10 C-Atomen im Alkyl- und 6 bis 15 C-Atomen im Arylteil,
- L: eine niedermolekulare, Lewis-basische, organische Verbindung,
- m: 0, 1, 2, 3 oder 4 und
- n: 0 oder 1.

## Beschreibung

Die vorliegende Erfindung betrifft polymerisationsaktive, nicht verbrückte, mononucleare Bisalkylmetall-Halbsandwichkomplexe der allgemeinen Formel

[CpR₄₋ₘ(SiR'₃)₁₊ₘ]M(L)[CH₂₋ₙ(SiR''₃)₁₊ₙ]₂ (I),

in der die Substituenten und Indizes die folgende Bedeutung haben:
- M: Scandium, Yttrium, Lanthan oder ein Lanthanoidmetall,
- R: Wasserstoff, Halogen, C₁- bis C₂₀-Alkyl, C₃- bis C₁₀-Cycloalkyl, C₆- bis C₁₅-Aryl oder C₃- bis C₃₀-Organosilyl, wobei zwei benachbarte Reste R auch eine 4 bis 18 C-Atome aufweisende gesättigte oder ungesättigte cyclische oder heterocyclische Gruppe ausbilden können,
- R', R'': C₁- bis C₂₀-Alkyl, C₃- bis C₁₀-Cycloalkyl, C₆- bis C₁₅-Aryl oder Alkylaryl mit 1 bis 10 C-Atomen im Alkyl- und 6 bis 15 C-Atomen im Arylteil,
- L: eine niedermolekulare, Lewis-basische, organische Verbindung,
- m: 0, 1, 2, 3 oder 4 und
- n: 0 oder 1.

Des weiteren betrifft die Erfindung die Verwendung der nicht verbrückten, mononuclearen Bisalkylmetall-Halbsandwichkomplexe als Katalysatoren für die (Co)polymerisation von polaren und unpolaren olefinisch ungesättigten Monomeren sowie von Lactonen. Außerdem betrifft die Erfindung ein Verfahren zur Herstellung von (Co)polymeren aus polaren und unpolaren olefinisch ungesättigten Monomeren sowie aus Lactonen.

Komplexe auf der Basis von Seltenerd-Metallen werden in jüngster Zeit verstärkt auf ihre Eignung als Katalysatoren für die koordinativ gesteuerte Polymerisation von unpolaren wie auch polaren olefinisch ungesättigten Monomeren untersucht (vgl. H. Yasuda, E. Ihara, Bull. Chem. Soc. Jpn. 1997, 70, S. 1745 - 1767). Polare Monomere wie Acrylate oder Acrylnitril werden bislang allerdings, insbesondere in technischen Verfahren, immer noch nach radikalischen Verfahren polymerisiert. Radikalische Polymerisationsverfahren lassen sich jedoch häufig nur schlecht kontrollieren und führen zu Polymerprodukten mit breiter Molekulargewichtsverteilung.

Polyolefine werden mittlerweile großtechnisch mit Hilfe definierter Metallocenkomplexe auf der Basis der frühen Übergangsmetalle hergestellt (s.a. Angew. ehem. Int. Ed. Engl. 1995, 34, S. 1143). Von Nachteil bei dem letztgenannten Verfahren ist, daß für eine effektive Reaktionsführung stets ein Cokatalysator in nicht geringer Menge zuzusetzen ist. Als ein solcher gängiger heterogener Cokatalysator hat sich Methylaluminoxan (MAO) bewährt. Mittels Metallocen-Katalyse hergestellte Polymerprodukte sind daher nicht selten durch Katalysator- bzw. Cokatalysatorrückstände verunreinigt und zeigen Beeinträchtigungen in ihrem Farbverhalten sowie bei den physikalischen, mechanischen oder rheologischen Eigenschaften. Häufig sind aufwendige Waschvorgänge erforderlich, um die Kontamination mit Katalysatorresten zu reduzieren.

Analog den Metallocenverbindungen der frühen Übergangsmetalle ist es mittlerweile möglich, ausgewählte polymerisationsaktive Sandwichkomplexe der Seltenerd-Metalle herzustellen. In der US 5,312,881 werden verbrückte Biscyclopentadienylkomplexe der Lanthanide beschrieben, mit deren Hilfe die Copolymerisation von α-substituierten Acrylaten gelingt. Dem Katalysatorsystem ist allerdings gegebenenfalls ein Lewis-saurer Cokatalysator, zum Beispiel Methylaluminoxan, zuzusetzen, um ein zufriedenstellendes Polymerisationsergebnis zu erhalten. In der EP-A 0 634 429 wird aufgezeigt, daß mit Hilfe von verbrückten Sandwichkomplexen des Samariums Blockcopolymere aus unpolaren und polaren Monomeren zugänglich sind (s. a. Yasuda et al., Macromolecules, 1992, 25, S. 5115-5116). Allerdings ist der zu verwendende Metallocenkomplex äußerst empfindlich bzw. instabil und einer spektroskopischen Analyse im Grunde nicht zugänglich. Verbrückte Sanawichkomplexe sind demgemäß in der Regel präparativ aufwendiger herzustellen als nicht verbrückte Sandwich- oder Halbsandwichkomplexe.

Ihara et al., Proc. Jpn. Acad., 1996, 71, S. 126, konnten zeigen, daß sich Alkylacrylate in Gegenwart von nicht verbrückten, mononuclearen Sandwichkomplexen des Samariums oder Yttriums - Sm(Me) (C₅Me₅)₂(THF) bzw. Y(Me) (C₅Me₅)₂(THF) (Me = Methyl, THF = Tetrahydrofuran) - koordinativ polymerisieren lassen. Nach Yasuda et al., Bull. Chem. Soc. Jpn., 1997, 70 (8), S. 1745 - 1767, gelingt die Polymerisation von Methylmethacrylat mit mononuclearen Komplexen vom Typ LnMe(C₅Me₅)₂ (Ln = Y, Sm, Yb oder Lu). Mit dem sterisch anspruchsvollen Komplex Sm(O-C₆H₂-2,6-(t-Bu)₂-4-Me)₂ konnten Hue et al., J. Rare Earths, 1995, 13, S. 144, Acrylnitril, allerdings nur in bescheidenen Ausbeuten, polymerisieren. Tanaka et al., Bull. Chem. Soc. Jpn., 1997, 70 (8), S. 1745 - 1767, setzten zur Acrylnitrilpolymerisation den Halbsandwichkomplex La[CH(SiMe₃)₂]₂(C₅Me₅) ein. Mu et al., Organometallics, 1996, 15, S. 2720 - 2726, beschreiben zwar die Herstellung eines Scandium-Halbsandwichkomplexes, setzen diesen aber nicht als Polymerisationskatalysator, sondern als Vorstufe für einen binuclearen Scandiumhydrid-Halbsandwichkomplexe ein. Dieser Komplex ist jedoch nicht polymerisationsaktiv.

Schaverien, Organometallics, 1994, 13 (1), S. 69 - 82, gelingt die Darstellung des binuclearen Yttriumhydrid-Halbsandwichkomplexes [(C₅Me₅)Y(OAr) (µ-H)]₂ (Ar = 2,6-C₆H₃-(t-Bu)₂) ausgehend von dem entsprechenden mononuclearen Monoalkylcyclopentadienylkomplex. Mit diesem binuclearen Yttriumkomplex lassen sich unpolare olefinisch ungesättigte Monomere polymerisieren, die Polymerisationsaktivität der mononuclearen Vorstufe wurde allerdings nicht untersucht.

Die bislang aufgefundenen mononuclearen Halbsandwichkomplexe von Seltenerd-Metallen zeigen, sofern sie überhaupt katalytisch aktiv sind, eine moderate Polymerisationsaktivität nur gegenüber ausgewählten polaren olefinisch ungesättigten Monomeren.

Es wäre wünschenswert, stabile Metallkomplexe zu finden, die bereits als solche für die Polymerisation eines breiten Spektrums an Monomeren gut geeignet sind und sich gleichzeitig auf einfache Weise in größerer Menge unproblematisch herstellen lassen.

Der vorliegenden Erfindung lag daher die Aufgabe zugrunde, stabile Metallkomplexe zu finden, mit denen sich vielfältige Monomere auch bei großtechnischer Prozeßführung in hoher Reinheit koordinativ zu einheitlichen Produkten polymerisieren lassen.

Demgemäß wurden die eingangs beschriebenen nicht verbrückten, mononuclearen Bisalkylmetall-Halbsandwichkomplexe auf der Basis von Seltenerd-Metallen gefunden. Des weiteren wurde deren Verwendung als Katalysatoren für die (Co)polymerisation von polaren und unpolaren olefinisch ungesättigten Monomeren gefunden. Außerdem wurde ein Verfahren zur Herstellung von (Co)polymeren aus den vorgenannten Monomeren gefunden.

Bevorzugte nicht verbrückte, mononucleare Bisalkylmetall-Halbsandwichkomplexe gehen zurück auf Verbindungen der allgemeinen Formel (I), in der
- M: Yttrium,
- R: C₁- bis C₁₀-Alkyl oder C₃- bis C₂₁-Organosilyl, wobei zwei benachbarte Reste R auch einen kondensierten aromatischen Cyclus bilden können,
- R', R'': C₁- bis C₁₀-Alkyl oder C₆- bis C₁₀-Aryl,
- L: Tetrahydrofuran, 2,5-Dialkyltetrahydrofuran, Dioxan, Dialkylether, Acetonitril, Triarylphosphin oder halogeniertes Triarylphosphin und
- m: 0
bedeuten.

Als Zentralmetall M kommen in den erfindungsgemäßen mononuclearen Komplexen (I) die sogenannten Seltenerd-Metalle, d.h. Scandium, Yttrium, Lanthan oder ein Lanthanoidmetall, also Cer, Praseodym, Neodym, Promethium, Samarium, Europium, Gadolinium, Terbium, Dysprosium, Holmium, Erbium, Thulium, Ytterbium und Lutetium in Frage (s.a. Lehrbuch der anorganischen Chemie, Holleman-Wiberg, de Gruyter, Berlin, 1985, S. 59). Bevorzugt sind Yttrium, Lanthan, Lutetium, Erbium und Ytterbium, besonders bevorzugt ist Yttrium. Die Metalle M liegen in den mononuclearen Komplexen (I) im allgemeinen formal dreifach positiv geladen vor.

Der monoanionische, η⁵-gebundene, cyclische Cyclopentadienylligand Cp verfügt über Reste R sowie über mindestens einen siliziumorganischen Rest -SiR'₃. Als Reste R kommen beispielsweise in Frage Wasserstoff, Halogen wie Fluor, Chlor oder Brom, lineares oder verzweigtes C₁- bis C₂₀-Alkyl, bevorzugt C₁- bis C₁₀-Alkyl, wie Methyl, Ethyl, n-Propyl, i-Propyl, n-Butyl oder t-Butyl, besonders bevorzugt Methyl, C₃- bis C₁₀-Cycloalkyl, bevorzugt C₃- bis C₇-Cycloalkyl, wie Cyclopropyl oder Cyclohexyl, oder C₆- bis C₁₅-Aryl, bevorzugt C₆- bis C₁₀-Aryl, wie Phenyl oder Naphthyl. Unter geeignete Arylsubstituenten fallen auch z.B. mit C₁- bis C₆-Alkyl wie Methyl oder i-Propyl oder mit Halogen wie Fluor, Chlor oder Brom substituiertes C₆- bis C₁₅-Aryl, bevorzugt C₆- bis C₁₀-Aryl. Zwei benachbarte Reste R können auch gemeinsam eine 4 bis 18, bevorzugt 4 bis 15 C-Atome aufweisende gesättigte oder ungesättigte cyclische oder heterocyclische Gruppe bilden. Hierunter fallen beispielsweise auch ankondensierte Aryleinheiten. Demgemäß stellen ebenfalls Indenyl-, Fluarenyl- oder Benzindenylsysteme geeignete monoanionische η⁵-gebundene Liganden dar.

Weiterhin kommen als Reste R auch Silylsubstituenten Si(R*)₃ in Frage. Die Reste R* können unabhängig voneinander C₁- bis C₂₀-Alkyl, bevorzugt C₁- bis C₁₀-Alkyl, z.B. Methyl, Ethyl oder i-Propyl, C₃- bis C₁₀-Cycloalkyl, bevorzugt C₃- bis C₇-Cycloalkyl, z.B. Cyclopropyl oder Cyclohexyl, C₆- bis C₁₅-Aryl, bevorzugt C₆- bis C₁₀-Aryl, insbesondere Phenyl, oder Alkylaryl mit 1 bis 10 C-Atomen im Alkyl- und 6 bis 15 C-Atomen im Arylteil, beispielsweise Benzyl, bedeuten. Die Reste R können in einer Verbindung (I) sowohl übereinstimmen als auch voneinander abweichende Bedeutungen annehmen.

Der beschriebene monoanionische, η⁵-gebundene, cyclische Ligand verfügt über mindestens einen siliziumorganischen Substituenten ,-SiR'₃, in dem die Reste R' die vorgehend beschriebene allgemeine und bevorzugte Bedeutung der Reste R* annehmen können. Die Reste R' können sowohl identisch vorliegen als auch voneinander abweichen. Beispielsweise können neben Methyl oder Ethyl gleichzeitig auch i-Propyl, Phenyl oder halogeniertes Aryl wie Pentafluorphenyl an das Siliziumatom gebunden sein.

Als das Metallzentrum M komplexierende, η⁵-gebundene Liganden sind unter den vorgenannten Verbindungen mit mindestens einer SiR'₃-Gruppe besonders solche geeignet, die sich von Cyclopentadienyl, Tetra-C₁- bis C₆-alkylcyclopentadienyl, Indenyl, Fluorenyl oder Benzindenyl ableiten, wobei die drei letztgenannten Liganden auch ein- oder mehrfach mit C₁- bis C₆-Alkylgruppen oder C₃- bis C₃₀-Organosilylgruppen substituiert sein können. Bevorzugt sind als η⁵-gebundene Liganden mit einer Organosilylgruppe -SiR'₃ substituiertes Cyclopentadienyl, Tetra-C₁- bis C₄-alkylcyclopentadienyl, Indenyl, Benzindenyl und 1- bis 3-fach C₁- bis C₄-alkyl-substituiertes Indenyl oder Benzindenyl. Besonders bevorzugt wird auf mit einer Trimethylsilyl-, Dimethylphenylsilyl- oder Dimethylpentafluorphenylsilylgruppe monosubstituiertes Cyclopentadienyl, Tetramethylcyclopentadienyl oder Indenyl, insbesondere Tetramethylcyclopentadienyl, zurückgegriffen.

Als koordinativ an das Metallzentrum gebundener Ligand L kommt im allgemeinen eine niedermolekulare organische Lewis-Base, d.h. eine Verbindung, die über einen Zweielektronendonor verfügt, in Betracht. Der Ligand L stellt beispielsweise Tetrahydrofuran, 2,5-Dialkyltetrahydrofuran wie 2,5-Dimethyltetrahydrofuran, Dioxan, Dialkylether wie Dimethylether oder Diethylether, Acetonitril, Triarylphosphin, insbesondere Triphenylphospin, oder partiell oder perhalogeniertes Triarylphosphin wie Tris(p-fluorphenyl)phosphin oder Tris(pentafluorphenyl)phosphin dar.

Die Reste R'' in Verbindungen (I) können die allgemeine Bedeutung der Reste R' annehmen. Bevorzugt werden diese Reste R'' derart gewählt, daß der Silylsubstituent -SiR''₃ eine sterisch anspruchsvolle Gruppe bildet. Demgemäß stellt bevorzugt mindestens ein Rest R'' beispielsweise eine i-Propyl-, t-Butyl-, Thexyl-, Phenyl- oder substituierte Phenylgruppe dar. Grundsätzlich werden aber auch bereits mit Verbindungen (I), in denen R'' ausschließlich Methyl bedeutet, sehr gute Resultate erzielt. Der η¹-gebundene Alkylligand kann ein- oder zweifach mit einer Silylgruppe substituiert sein (n = 0 oder 1).

Besonders bevorzugte nicht verbrückte, mononucleare Bisalkylmetall-Halbsandwichkomplexe auf der Basis von Seltenerd-Metallen sind [(Trimethylsilyl)cyclopentadienyl]bis(trimethylsilylmethyl)-yttrium, {[Dimethyl(phenyl)silyl]cyclopentadienyl} bis (trimethylsilylmethyl)yttrium und {(Dimethyl(pentafluorphenyl)silyl]cyclopentadienyl}bis(trimethylsilylmethyl)yttrium.

Die erfindungsgemäßen Bisalkylmetallkomplexe gemäß der allgemeinen Formel (I) lassen sich ausgehend von Verbindungen des Typs M[CH₂₋ₙ(SiR''₃)₁₊ₙ]₃(L)₂ (II) (n = 0 oder 1) durch Umsetzung mit zum Beispiel C₅R₄(H)(SiR'₃) (III) erhalten. Bei einer Reaktionstemperatur im Bereich von -20 bis 70°C, bevorzugt von -10 bis 50°C, genügen zumeist Reaktionszeiten von 1 bis 5 Stunden, um quantitative Ausbeuten in inerten Lösungsmitteln zu erhalten. Geeignete inerte Lösungsmittel stellen beispielsweise aliphatische Kohlenwasserstoffe wie n-Pentan, n-Hexan oder Cyclohexan, aromatische Kohlenwasserstoffe wie Benzol, Toluol oder Xylol oder halogenierte Kohlenwasserstoffe wie Dichlormethan oder Chloroform dar. Bevorzugt wird auf aliphatische Kohlenwasserstoffe wie n-Pentan und n-Hexan zurückgegriffen. Üblicherweise wird die Reaktion unter Normaldruck durchgeführt, es können aber auch Reaktionsdrücke im Bereich von 0,5 bis 20 bar zur Anwendung kommen.

Der erfindungsgemäße mononucleare Halbsandwichkomplex (I) sowie allgemein Komplexe, die unter die allgemeine Formel (C₅R₅)M(L)[CH₂₋ₙ(SiR''₃)₁₊ₙ]₂ (IV) fallen, in der die Substituenten R und R'', der Ligand L und das Zentralmetall M sowie der Index n die vorgehend für (I) beschriebene allgemeine und bevorzugte Bedeutung annehmen können, und unter die demgemäß auch die Verbindung (I) fällt, können als solche als auch in Form beliebiger Mischungen von unter die allgemeine Formel (I) bzw. (IV) fallenden Verbindungen als Katalysator für die Polymerisation von polaren und/oder unpolaren olefinisch ungesättigten Monomeren oder von Lactonen eingesetzt werden.

Unter polare ungesättigte Monomere fallen Vinylcyanide wie Acrylnitril oder Methacrylnitril, Acrylsäure und die C₁- bis C₂₀-Alkyl- und C₆- bis C₁₅-Arylester der Acrylsäure, ebenfalls Methacrylsäure und die C₁- bis C₂₀-Alkyl- und C₆- bis C₁₅-Arylester der Methacrylsäure oder deren Mischungen. Als Acrylate geeignet sind insbesondere Methyl-, Ethyl-, Propyl-, n-Butyl-, t-Butyl-, 2-Ethylhexyl-, Glycidyl- und Phenylacrylat, als Methacrylate Methyl-, Ethyl-, Propyl-, n-Butyl-, t-Butyl-, 2-Ethylhexyl-, Glycidyl- und Phenylmethacrylat. Besonders bevorzugt als polare ungesättigte Monomere sind n-Butyl-, t-Butyl- und 2-Ethylhexylacrylat, Glycidylacrylat sowie Acrylnitril.

Weiterhin geeignet als polare Monomere sind Lactone, insbesondere solche enthaltend 3 bis 10 Ringkohlenstoffatome. Unter den Lactonen sind Propyllacton, Valerolacton und Caprolacton bevorzugt. Es können auch beliebige Mischungen an Lactonen eingesetzt werden.

Als unpolare olefinisch ungesättigte Monomere kommen Ethen, Propen oder C₄- bis C₂₀-α-olefinische Kohlenwasserstoffe wie 1-Buten, 1-Hexen, 1-Octen oder 1-Decen in Frage. Geeignet sind weiterhin vinylaromatische Verbindungen wie Styrol, α-Methylstyrol oder Vinyltoluol. Bevorzugt wird auf Ethen, Propen oder Styrol, besonders bevorzugt auf Ethen zurückgriffen. Es können auch Mischungen an unpolaren olefinisch ungesättigten Monomeren eingesetzt werden.

Mit den beschriebenen mononuclearen Metallkomplexen (I) bzw. (IV) können auch beliebige Gemische an unpolaren olefinisch ungesättigten Monomeren, beliebige Gemische an polaren olefinisch ungesättigte Monomeren oder Mischungen, bestehend aus den vorgenannten polaren und unpolaren olefinisch ungesättigten Monomeren, (co)polymerisiert werden.

Die Polymerisation der polaren olefinisch ungesättigten Monomeren in Gegenwart von Verbindungen (I) oder (IV) kann in Masse oder in Lösung vorgenommen werden. Wird in Lösung polymerisiert, greift man bevorzugt auf aprotische Lösungsmittel zurück. Beispielsweise können aliphatische Kohlenwasserstoffe wie Pentan oder Hexan, aromatische Kohlenwasserstoffe wie Benzol, Toluol oder Xylol oder halogenierte Kohlenwasserstoffe wie Dichlormethan oder Chloroform zum Einsatz kommen. Des weiteren können auch niedermolekulare lineare oder cyclische Etherverbindungen wie Diethylether oder Tetrahydrofuran verwendet werden. Bevorzugt wird die Reaktion in aromatischen Kohlenwasserstoffen wie Toluol durchgeführt. Die Ausgangskonzentration des Monomeren wird dabei im allgemeinen auf einen Wert im Bereich von 0,001 bis 5, bevorzugt von 0,01 bis 4 mol/l eingestellt. Die Polymerisationstemperatur kann bei der Reaktionsführung in Masse wie auch in Lösung über einen weiten Bereich variiert werden. Üblicherweise wird eine Temperatur im Bereich von -100 bis 90°C, bevorzugt unterhalb von 65°C ausgewählt. Die Polymerisationsdauer bewegt sich in der Regel im Bereich von 1 bis 50 Stunden, bewährt haben sich Reaktionszeiten von 10 bis 24 Stunden. Die Polymerisationsreaktionen gelingen bei Normaldruck ebenso wie bei Drücken im Bereich von 0,001 bis 50 bar. Üblicherweise wird bei bei Drücken im Bereich von 0,5 bis 20 bar polymerisiert. Das Verhältnis von Monomer zu Katalysator liegt üblicherweise im Bereich von 50 bis 10 000, bevorzugt von 70 bis 5000. Bevorzugt werden die beschriebenen Polymerisationsreaktionen unter inerten Reaktionsbedingungen, d.h. unter Ausschluß von Sauerstoff und Feuchtigkeit durchgeführt. Gegebenenfalls kann als Schutzgas zum Beispiel Argon oder Stickstoff verwendet werden.

Für die Herstellung von Polylactonen können die vorgenannten Polymerisationsbedingungen in entsprechender Weise übernommen werden. Allerdings reichen Reaktionszeiten von einer Stunde und weniger häufig bereits aus, um hohe Ausbeuten zu erzielen.

Die in Gegenwart der mononuclearen Metallkomplexe (I) oder (IV) gemäß dem vorgehend beschriebenen Verfahren erhaltenen polaren Polymeren fallen regelmäßig in ataktischer Form an. Es lassen sich ausgehend von polaren olefinisch ungesättigten Monomeren ohne weiteres (Co)polymere mit Molekulargewichten Mₙ im Bereich von 2000 bis 200000 sowie bevorzugt größer 3000 g/mol in hohen Ausbeuten realisieren. Die ermittelten Polydispersitäten (M_{w}/Mₙ) liegen im Bereich von 1,1 bis 3,0, bevorzugt unterhalb von 1,7, die Ausbeuten liegen regelmäßig oberhalb von 50%, Ausbeuten im Bereich von 60 bis 100% können ebenfalls reproduzierbar erhalten werden. Ausgehend von Lactonen sind Polymere mit Molekulargewichten im Bereich von 10 000 bis 1 Mio, bevorzugt größer 50 000 und insbesondere größer 100 000 g/mol erhältlich. Die Polydispersitäten liegen im Bereich von 1,1 bis 3,0, bevorzugt unterhalb von 1,5. Die Ausbeuten sind regelmäßig sehr hoch und liegen im allgemeinen im Bereich von 70 bis 100 %.

Die Polymerisation der unpolaren Monomeren in Gegenwart von Verbindungen (I) bzw. (IV) kann ebenfalls in Masse oder in Lösung vorgenommen werden. Wird in Lösung polymerisiert, greift man bevorzugt auf aprotische Lösungsmittel zurück. Beispielsweise können aliphatische Kohlenwasserstoffe wie Pentan oder Hexan, aromatische Kohlenwasserstoffe wie Benzol, Toluol oder Xylol oder halogenierte Kohlenwasserstoffe wie Dichlormethan oder Chloroform zum Einsatz kommen. Des weiteren können auch niedermolekulare lineare oder cyclische Etherverbindugen wie Diethylether oder Tetrahydrofuran verwendet werden. Besonders bevorzugt werden Hexan und Dichlormethan sowie insbesondere Toluol verwendet. Die Ausgangskonzentration des Monomeren wird im allgemeinen auf einen Wert im Bereich von 0,001 bis 5, bevorzugt von 0,01 bis 4 mol/l eingestellt. Die Polymerisationstemperatur kann über einen weiten Bereich variiert werden. Üblicherweise wird eine Temperatur im Bereich von -100 bis 90°C, bevorzugt unterhalb von 65°C ausgewählt. Die Polymerisationsdauer bewegt sich in der Regel im Bereich von 1 bis 50 Stunden, bewährt haben sich Reaktionszeiten kleiner 10 Stunden. Die Polymerisationsreaktionen gelingen bei Normaldruck ebenso wie bei Drücken im Bereich von 0,001 bis 100 bar. Üblicherweise wird bei Drücken im Bereich von 0,5 bis 20 bar polymerisiert. Bevorzugt werden die beschriebenen Polymerisationsreaktionen unter inerten Reaktionsbedingungen, d.h. unter Ausschluß von Sauerstoff und Feuchtigkeit, durchgeführt.

Bei den vorgehend beschriebenen Verfahren zur Herstellung von unpolaren und polaren Polymeren hat es sich als vorteilhaft herausgestellt, den erfindungsgemäßen Komplex (I) bzw. den Komplex (IV) zu der Monomerlösung zu geben, um die Polymerisation zu starten. Natürlich kann aber auch die Komplexverbindung (I) bzw. (IV) als solche oder in gelöster Form vorgelegt werden. Die Polymerisation erfordert im allgemeinen nicht die Zugabe weiterer Coaktivatoren oder -katalysatoren.

Die in Gegenwart der mononuclearen Metallkomplexe (I) oder (IV) aus unpolaren Monomeren erhaltenen Polymeren weisen im allgemeinen Molekulargewichte M_{w} im Bereich von 1000 bis 500 000 sowie bevorzugt größer 5000 g/mol auf. Polymere auf der Basis von C₃- bis C₂₀-olefinisch ungesättigten Verbindungen fallen regelmäßig in ataktischer Form an. Selbst bei kurzen Reaktionszeiten, z.B. im Bereich von 0,5 bis 5 h, werden bereits gute Ausbeuten bzw. Umsätze erzielt. Häufig ist bereits eine Reaktionszeit von einer Stunde ausreichend. Katalysatoraktivitäten (= g Polymer/mmol Katalysator/hr/bar) größer 5 und selbst größer 15 sind dabei ohne weiteres möglich.

Mit den beschriebenen Metallkomplexen (I) bzw. (IV) gelingt nicht nur der Zugang zu Homopolymeren wie Homopolyacrylnitril, Homopoly(n-butyl)acrylat oder Polyethylen, sondern darüber hinaus sind auch Blockcopolymere, bestehend entweder aus unterschiedlichen unpolaren, unterschiedlichen polaren oder aus unpolaren und polaren Monomereinheiten, darstellbar. Exemplarisch seien unter den letztgenannten Copolymeren Poly(ethen-b-t-butylacrylat), Poly(ethen-b-methylacrylat), Poly(ethen-b-methylmethacrylat), Poly(ethen-b-ε-caprolacton) und Poly(acrylnitril-b-ethen) aufgeführt.

Die beschriebenen Polymerisationsreaktionen werden im allgemeinen durch Zugabe einer protischen Verbindung, beispielsweise eines niedermolekularen Alkohols wie Methanol, Ethanol oder i-Propanol, beendet. Das erhaltene (Co)polymer fällt in der Regel als Feststoff aus und kann mechanisch, z.B. mittels Filtration, abgetrennt werden. Die nach den beschriebenen Verfahren erhaltenen (Co)polymere eignen sich für die Herstellung von Fasern, Folien und Formkörpern.

Die gemäß dem beschriebenen Verfahren aus Acrylaten erhaltenen Homo- und copolymeren können u.a. als Schlagzähmodifier in thermoplastischen Polymeren oder Polymerblends eingesetzt werden. Als geeignete thermoplastische Polymere oder Blendkomponenten seien Polyamide und Polyester genannt. Polyacrylnitril eignet sich u.a. als Fasermaterial.

Die erfindungsgemäßen mononuclearen Halbsandwichkomplexe auf Basis von Seltenerd-Metallen sind auf einfache Weise präparativ zugänglich und zeichnen sich durch eine gute thermische Stabilität aus. Sie sind für die Polymerisation eines breiten Spektrums an polaren und unpolaren Monomeren geeignet. Mit dem erfindungsgemäßen Verfahren sind sowohl Homo- als auch Blockcopolymere zugänglich. Die erhaltenen Polymere weisen eine geringe Polydispersität auf. Da ein Zusatz von Cokatalysatoren bzw. - aktivatoren sowohl bei den unpolaren wie auch bei den polaren Monomeren nicht erforderlich ist bzw. sogar aktivitätsmindernd wirken kann, fallen die erhaltenen Polymere direkt, d.h. ohne zusätzliche Aufreinigungsschritte, in sehr hoher Reinheit und reproduzierbar guter Ausbeute an. Die nach den beschriebenen Verfahren erhältlichen (Co)polymeren weisen in der Regel Molekulargewichte auf, die für werkstofftechnische Anwendungen geeignet sind.

Im folgenden wird die vorliegende Erfindung anhand von Beispielen näher erläutert.

### Beispiele:

Die Molekulargewichte der hergestellten Homopolymeren wurden mittels Gelpermeationschromatographie an einer 60cm-5µ-SDV-Säule gegen Polystyrol als Standard mit Tetrahydrofuran als Eluent bei einer Fließrate von 1 ml/min bestimmt.

Schmelzpunkte und Schmelzenthalpien von Polyethylen wurden mittels DSC an einem Gerät DSC 204 der Fa. Netzsch bestimmt.

Die ¹H-NMR-,¹³C-NMR- und ²⁹Si-NMR-spektroskopischen Untersuchungen wurden an einem Gerät DRX 400 der Fa. Bruker durchgeführt.
I. Herstellung von erfindungsgemäßen mononuclearen Bisalkylyttrium-Halbsandwichkomplexen
   a) Darstellung von Y(CH₂SiMe₃)₃(THF)₂
      Yttriumchlorid (586 mg) wurde in Tetrahydrofuran (THF) (30 ml) aufgenommen und 30 min bei 55°C gerührt. Das Solvens wurde destillativ entfernt und der feste Rückstand mit Hexan (40 ml) und THF (0,3 ml) versetzt. Bei -78°C wurde eine Lösung von LiCH₂SiMe₃ (856 mg) in Hexan (20 ml) zugegeben und die erhaltene Suspension 1,5 h bei 0°C gerührt. Filtration des Reaktionegemisches lieferte Y(CH₂SiMe₃)₃(THF)₂ in Form farbloser Microkristalle. ¹H-NMR(C₆D₆, 25°C): δ = -0.71 (d, ²J(Y,H) = 2.3 Hz, 6H; Y-CH₂), 0.27 (s, 27 H; SiCH₃), 1.30 (m, 8 H; β-CH₂), 3.93 (m, 8 H; α-CH₂); ¹³C-NMR (C₆D₆, 25°C): δ = 4.6 (SiCH₃), 25.0 (β-CH₂), 33.7 (d, ¹J(Y,C) = 35.7 Hz, Y-CH₂), 70.8 (β-CH₂).
   b) Darstellung von [C₅Me₄(SiMe₃)]Y(CH₂SiMe₃)₂(THF) (K1)
      Zu Y(CH₂SiMe₃)₃(THF)₂ (365 mg) in Pentan (10 ml) gab man bei 0°C eine Lösung von ([(C₅Me₄(H)(SiMe₃)] (144 mg) in Pentan (5 ml) und rührte über einen Zeitraum von 2 h bei dieser Temperatur. Die dekantierte Reaktionslösung wurde im Vakuum eingeengt und das gewünschte Produkt mittels Kristallisation in kaltem Pentan (-30°C) in Form farbloser Mikrokristalle erhalten (280 mg). ([(C₅Me₄(H)(SiMe₃)] wurde nach einer Vorschrift von P. Jutzi, R. Sauer, J. Organomet. Chem., 1973, 50, S. C29 ff. dargestellt). ¹H-NMR: δ = -0.61 (d, ²J(Y,H) = 3.1 Hz, 4 H, Y-CH₂), 0.30 (s, 18 h, CH₂SiCH₃), 0.41 (s, 9H, SiCH₃, 1.15 (m, 4H, β-CH₂), 1.96, 2.24 (s, 6H, C₅Me₄), 3.52 (m, 4H, α-CH₂); ¹³C-NMR: δ=2.6 (SiCH₃), 4.6 (CH₂SiCH₃), 11.5, 14.6 (C₅Me₄), 24.8 (β-CH₂), 34.7 ( d ¹J(Y,C) = 43.7 Hz, Y-CH₂), 70.4 (α-CH₂), 115.0 (C₅Me₄ C-SiCH₃), 123.3, 126.4 C₅Me₄). ²⁹Si-NMR: δ= -10.3 (SiMe₃), -3.2 (d, ²J(Y, Si) = 2.1 Hz, CH₂SiMe₃).
   c) Darstellung von [C₅Me₄(SiMe₂Ph)]Y(CH₂SiMe₃)₂(THF) (K2)
      Zu Y(CH₂SiMe₃)₃(THF)₂ (355 mg) in Pentan (10 ml) gab man bei 0°C eine Lösung von ([(C₅Me₄(H)(SiMe₂Ph)] (190 mg) in Pentan (5 ml) und rührte über einen Zeitraum von 2 h bei dieser Temperatur. Die dekantierte Reaktionslösung wurde im Vakuum eingeengt und das gewünschte Produkt mittels Kristallisation in kaltem Pentan (-30°C) in Form farbloser Mikrokristalle erhalten (305 mg). ([(C₅Me₄ (H) (SiMe₂Ph)] wurde nach einer Vorschrift von P. Jutzi, R. Sauer, J. Organomet. Chem., 1973, 50, S. C29 ff. dargestellt). ¹H-NMR: δ= -0.58 (d, ²J(Y,H) = 3.1 Hz, 4 H, Y-CH₂), 0.30 (s, 18 H, CH₂SiCH₃), 0.69 (s, 6 H, SiCH₃Ph), 1.20 (m, 4 H, β-CH₂), 1.97, 2.15 (s, 6 H, C₅Me₄), 3.47 (m, 4 H, α-CH₂), 7.17 (m, 3 H, C₆H₅), 7.53 (m, 2 H, C₆H₅); ¹³C-NMR: δ = 1.8 (siCH₃Ph), 4.6 (CH₂SiCH₃), 11.6, 14.8 (C₅Me₄), 24.9 (β-CH₂), 34.9 (d ¹J(Y,C) = 43.7 Hz, Y-CH₂), 70.0 (α-CH₂), 112.6 (C₅Me₄ C-SiCH₃), 123.6, 127.1 (C₅Me₄), 128.0, 128,8, 134.3 (C₆H₅), 141.6 (C₆H₅), 141.6 (C₆H₅ C-SiCH₃); ²⁹Si-NMR: δ = -13.8 (SiMe₂Ph), -3.2 (d, ²J(Y,Si) = 2 HZ, CH₂SiMe₃).
II. Herstellung eines nicht erfindungsgemäßen mononuclearen Yttrium-Halbsandwichkomnplexes
   a) Darstellung von [(N-t-Bu) (SiMe₂) (C₅Me₄)]Y(CH₂SiMe₃)(THF) (K3)
      Zu Y(CH₂SiMe₃)₃(THF)₂ (365 mg) in Pentan (10 ml) gab man bei 0°C eine Lösung von (C₅Me₄H)SiMe₂NHt-Bu (186 mg) in Hexan (5 ml) und rührte über einen Zeitraum von 2 h bei dieser Temperatur. Die dekantierte Reaktionslösung wurde im Vakuum eingeengt und das gewünschte Produkt mittels Kristallisation in kaltem Pentan (-30°C) in Form farbloser Mikrokristalle erhalten (320 mg). ((C₅Me₄H)SiMe₂NHt-Bu wurde nach einer Vorschrift von Shapiro et al., J. Am. Chem. Soc. 1994, 116, S. 4623, dargestellt). ¹H-NMR: δ = -0.93 (d, ²J(Y,H) = 3.1 Hz, 2H; Y-CH₂), 0.28 (s, 9 H, CH₂SiCH₃), 0.74 (s, 6 H, SiCH₃), 1.08 (br s, 4 H, β-CH₂), 1.38 (s, 9 H, C(CH₃)₃), 2.04, 2,19 (s, 6 H, C₅Me₄), 3.36 (br s, 4 H, α-CH₂); ¹³C-NMR δ = 4.7 (CH₂SiCH₃), 8.4 (NSiCH₃), 11.5, 14.0 (C₅Me₄), 24.7 (β-CH₂), 26.2 (d, ¹J(Y,C) = 44.9 Hz, Y-CH₂), 36.0 (C(CH₃)₃), 54.0 (C(CH₃)₃), 70.7 α-CH₂), 106.6 (C₅Me₄ C-SiCH₃), 122.3, 126.4 (C₅Me₄); ²⁹Si-NMR: δ = -25.0 (NSiMe₂), -2.7 (d, ²J(Y,Si) = 1.9 Hz, CH₂SiMe₃).
III. Polymerisationsreaktionen
   a) Homopolymerisation polarer Monomere
      i) Homopolymerisation von Acrylnitril
         Versuch 1 (erfindungsgemäß)
            Zu Acrylnitril (2,7 g) in Toluol (10 ml) gab man den gemäß I.b) erhaltenen mononuclearen Komplex K1 (105 mg) und rührte bei -30°C über einen Zeitraum von 14 h. Nach Zugabe von Methanol (10 ml) zum Reaktionsgemisch konnte Polyacrylnitril als weißer Feststoff isoliert werden (1,8 g, Ausbeute: 66 %).
         Versuch 2 (nicht erfindungsgemäß)
            Zu Acrylnitril (3,5 g) in Toluol (10 ml) gab man den gemäß II.a) erhaltenen mononuclearen Komplex K3 (99 mg) und rührte bei Raumtemperatur über einen Zeitraum von 16 h. Nach Zugabe von Methanol (10 ml) zum Reaktionsgemisch konnte Polyacrylniril als weißer Feststoff isoliert werden (0,84 g, Ausbeute 24 %).
      ii) Homopolymerisation von t-Butylacrylat
         Versuch 3 (erfindungsgemäß)
            Zu t-Butylacrylat (1,97 g) in Toluol (10 ml) gab man den gemäß I.b) erhaltenen monouclearen Komplex K1 (105 mg) und rührte bei -30°C über einen Zeitraum von 17 h. Nach Zugabe von Methanol (10 ml) zum Reaktionsgemisch konnte Poly(t-butylacrylat) als weißer Feststoff isoliert werden (1,95 g, Ausbeute: 99 %).
         Versuch 4 (nicht erfindungsgemäß)
            Zu t-Butylacrylat (7,9 g) in Toluol (10 ml) gab man den gemäß II.a) erhaltenen mononuclearen Komplex K3 (99 mg) und rührte bei -30°C über einen Zeitraum von 18 h. Nach Zugabe von Methanol (15 ml) zum Reaktionsgemisch konnte Poly(t-butylacrylat) als weißer Feststoff isoliert werden (3,0 g, Ausbeute: 38 %).
      iii) Homopolymerisation von ε-Caprolacton
         Versuch 5 (erfindungsgemäß)
            Zu ε-Caprolacton (5,67 g) in Toluol (50 ml) gab man bei 0°C den Katalysator K1 (132 mg) und rührte eine Stunde bei dieser Temperatur. Die Reaktion wurde durch Zugabe von Methanol (50 ml) abgebrochen und der Polyester als weißer Feststoff isoliert (5,2 g, Ausbeute 92 %).
   b) Homopolymerisation unpolarer Monomere
      i) Homopolymerisaton von Ethen
         Versuch 6 (erfindungsgemäß)
            Ethen wurde bei einem Druck von 5 bar in Gegenwart von mononuclearem Katalysator K1 (24,8 mg) in Toluol (50 ml) bei Raumtemperatur für eine Stunde polymerisiert. Nach Zugabe von Methanol (25 ml) zum Reaktionsgemisch konnte Polyethylen als weißer Feststoff isoliert werden (3,6 g).
         Versuch 7 (erfindungsgemäß)
            Ethen wurde bei einem Druck von 5 bar in Gegenwart von mononuclearem Katalysator K2 (32,1 mg) in Toluol (50 ml) bei Raumtemperatur für eine Stunde polymerisiert. Nach Zugabe von Methanol (25 ml) zum Reaktionsgemisch konnte Polyethylen als weißer Feststoff isoliert werden. (1,55 g).
         Versuch 8 (nicht erfindungsgemäß)
            Ethen wurde bei einem Druck von 4,5 bar in Gegenwart von mononuclearem Katalysator K1 (25,1 mg) und 10 Äquivalenten Al(i-Bu)₃ (0,5 ml einer 1 molaren Lösung in Toluol), bezogen auf K1, in Toluol (50 ml) bei Raumtemperatur für eine Stunde polymerisiert. Nach Zugabe von Methanol (25 ml) zum Reaktionsgemisch konnte Polyethylen als weißer Festsoff isoliert werden (0,2 g).
         Versuch 9 (nicht erfindungsgemäß)
            Ethen wurde bei einem Druck von 4,5 bar in Gegenwart von mononuclearem Katalysator K3 (20 mg) in Toluol (50 ml) bei Raumtemperatur für zwei Stunden polymerisiert. Nach Zugabe von Methanol (25 ml) zum Reaktionsgemisch konnte Polyethylen isoliert werden (75 mg).

Die Ergebnisse zu den Versuchen 1 bis 5 sind in der Tabelle 1, die Ergebnisse zu den Versuchen 6 bis 9 in der Tabelle 2 zusammengefaßt.

**Tabelle 1**

| Polymerisation von Acrylnitril, t-Butylacrylat und ε-Caprolacton | | | | | | | | |
|---|---|---|---|---|---|---|---|---|
| Versuch | Monomer | T [°C] | t [h] | [Mₒ]/[Kat] | Ausb. [%] | Aktivität [ g Polym./mmol Kat./h] | Mₙ^{b)} [g/mol] | Mₙ/M_{w} |
| 1 | Acrylnitril | -30 | 14 | 256 | 66 | 0,64 | 3400 | n.b.^{c)} |
| 2^{a)} | Acrylnitril | +25 | 16 | 328 | 24 | 0,26 | 3300 | n.b.^{c)} |
| 3 | t-Butylacrylat | -30 | 17 | 77 | 99 | 0,57 | 68000 | 1.62 |
| 4^{a)} | t-Butylacrylat | -30 | 18 | 79 | 38 | 0,55 | 30000 | 1.97 |
| 5 | ε-Caprolacton | 0 | 1 | 199 | 92 | 20,86 | 109000 | 1,42 |

| | | | | | | | | |
|---|---|---|---|---|---|---|---|---|
| ^{a)} Vergleichsversuch, | | | | | | | | |
| ^{b)} bestimmt mittels Gelpermeationschromatographie, | | | | | | | | |
| ^{c)} n.b. = nicht bestimmt. | | | | | | | | |

**Tabelle 2**

| Polymerisation von Ethen | | | | | | | | |
|---|---|---|---|---|---|---|---|---|
| Versuch | T [°C] | t [h] | P [bar] | [Kat.] (mol/l)x10^{-³} | Ausb. [g] | Aktivität [g Polym./mmol Kat./h/bar] | Smp. [°C] | Schmelzenthalpie [J/g] |
| 6 | +25 | 1 | 5 | 0,80 | 3,6 | 15,3 | 139,6 | 135,7 |
| 7 | +25 | 1 | 5 | 1,08 | 1,55 | 5,7 | 132,3 | 134,7 |
| 8^{a)} | +25 | 4 | 4,5 | 0,98 | 0,196 | 0,2 | n.b.^{c)} | n.b.^{c)} |
| 9^{a)} | +25 | 2 | 4,5 | 0,80 | 0,075 | 0,2 | n.b.^{c)} | n.b.^{c)} |

| | | | | | | | | |
|---|---|---|---|---|---|---|---|---|
| a) Vergleichsversuch | | | | | | | | |
| b) bestimmt mittels Gelpermeationschromatographie, | | | | | | | | |
| c) n.b = nicht bestimmt. | | | | | | | | |

## Patentansprüche

1. Polymerisationsaktive, nicht verbrückte Bisalkylmetall-Halbsandwichkomplexe der allgemeinen Formel
[CpR₄₋ₘ(SiR'₃)₁₊ₘ]M(L)[CH₂₋ₙ(SiR''₃)₁₊ₙ]₂ (I),
in der die Substituenten und Indizes die folgende Bedeutung haben:
M Scandium, Yttrium, Lanthan oder ein Lanthanoidmetall,
R Wasserstoff, Halogen, C₁- bis C₂₀-Alkyl, C₃- bis C₁₀-Cycloalkyl, C₆- bis C₁₅-Aryl oder C₃- bis C₃₀-Organosilyl, wobei zwei benachbarte Reste R auch eine 4 bis 18 C-Atome aufweisende gesättigte oder ungesättigte cyclische oder heterocyclische Gruppe ausbilden können,
R', R'' C₁- bis C₂₀-Alkyl, C₃- bis C₁₀-Cycloalkyl, C₆- bis C₁₅-Aryl oder Alkylaryl mit 1 bis 10 C-Atomen im Alkyl- und 6 bis 15 C-Atomen im Arylteil,
L eine Lewis-basische, niedermolekulare organische Verbindung,
m 0, 1, 2, 3 oder 4 und
n 0 oder 1.

2. Bisalkylmetall-Halbsandwichkomplexe nach Anspruch 1, dadurch gekennzeichnet, daß
M Yttrium,
R C₁- bis C₁₀-Alkyl oder C₃- bis C₂₁-Organosilyl, wobei zwei benachbarte Reste R auch einen kondensierten aromatischen Cyclus bilden können,
R', R'' C₁- bis C₁₀-Alkyl oder C₆- bis C₁₀-Aryl,
L Tetrahydrofuran, 2,5-Dimethyltetrahydrofuran, Dioxan, Dialkylether, Acetonitril, Triarylphosphin oder halogeniertes Triarylphosphin und
m 0
bedeuten.

3. Verwendung der Bisalkylmetall-Halbsandwichkomplexe gemäß den Ansprüchen 1 oder 2 als Katalysatoren für die (Co)polymerisation von polaren und unpolaren olefinisch ungesättigten Monomeren oder von Lactonen.

4. Verfahren zur Herstellung von (Co)polymeren aus polaren oder unpolaren olefinisch ungesättigten Monomeren oder aus Lactonen, dadurch gekennzeichnet, daß man die Monomeren in Gegenwart eines nicht verbrückten Bisalkylmetall-Halbsandwichkomplexe der allgemeinen Formel
(C₅R₅)M(L)[CH₂₋ₙ(SiR''₃)₁₊ₙ]₂ (IV),
in der die Substituenten und Indizes die folgende Bedeutung haben:
M Scandium, Yttrium, Lanthan oder ein Lanthanoidmetall,
R Wasserstoff, Halogen, C₁- bis C₂₀-Alkyl, C₃- bis C₁₀-Cycloalkyl, C₆- bis C₁₅-Aryl oder er bis C₃₀-Organosilyl, wobei zwei benachbarte Reste R auch eine 4 bis 18 C-Atome aufweisende gesättigte oder ungesättigte cyclische oder heterocyclische Gruppe ausbilden können,
R'' C₁- bis C₂₀-Alkyl, C₃- bis C₁₀-Cycloalkyl, C₆- bis C₁₅-Aryl oder Alkylaryl mit 1 bis 10 C-Atomen im Alkyl- und 6 bis 15 C-Atomen im Arylteil,
L eine niedermolekulare, Lewis-basische, organische Verbindung und
n 0 oder 1
(co)polymerisiert.

5. Verfahren nach Anspruch 4, dadurch gekennzeichnet, daß man als polare Monomere (Meth)acrylsäure, die Ester der (Meth)acrylsäure, (Meth)acrylnitril oder Lactone und als unpolare Monomere Ethen oder C₃- bis C₂₀-α-Olefine verwendet.
